# EUROPEAN PATENT APPLICATION

(11) **EP 1 213 482 A1**
(43) Date of publication of application: **12.06.2002**
(21) Application number: 01310055.7
(22) Date of filing: 30.11.2001
(51) Int. Cl.: F04D 19/04, F04D 17/16

(54) **Vacuum pump**

(30) Priority: 01.12.2000 JP 2000367225
(71) Applicant: Seiko Instruments Inc., Chiba-shi, Chiba (JP)
(72) Inventor: Yamashita, Yoshihiro, c/o Seiko Instruments Inc., Chiba-shi, Chiba (JP); Nonaka, Manabu, c/o Seiko Instruments Inc., Chiba-shi, Chiba (JP); Kabasawa, Takashi, c/o Seiko Instruments Inc., Chiba-shi, Chiba (JP)
(74) Representative: Sorenti, Gino

(57) **Abstract**

The present invention provides a vacuum pump allowing process pressure control with high responsiveness and miniaturization and cost reduction of the overall apparatus, as well as reduction of the running cost. A second pump mechanism portion is equipped on the way of an exhaust passage communicating an exhaust side out of a first pump mechanism portion with a gas outlet. The second pump mechanism portion is constructed to be capable of changing the pump speed of rotation independently of the first pump mechanism portion. When the pump speed of rotation of the second pump mechanism portion is changed, the pressure of the exhaust side out (backing pressure) of the first pump mechanism portion changes. Therefore, efficiency of gas suction from a gas inlet to the first pump mechanism portion side is increased or decreased, and the pressure in a process chamber is changed.

## Description

### BACKGROUND OF THE INVENTION

### 1. Field of the Invention

The present invention relates to a vacuum pump used for a semiconductor manufacturing apparatus, an electron microscope, a surface analyzing apparatus, a mass spectroscope, a particle accelerator, a nuclear fusion experiment apparatus, etc.

### 2. Description of the Related Art

Semiconductor manufacturing involves processes such as dry etching, CVD and the like. These processes are implemented in a vacuum vessel called a process chamber. As methods for controlling process pressure in this process chamber, (1) a method of using a conductance valve and (2) a system of introducing gas to a chamber by utilizing amass flow control (hereinafter, abbreviated as "MFC") are known. Further, (3) a system of introducing gas to an exhaust side of a turbo molecular pump for evacuating the process chamber is also proposed.

In the method of using a conductance valve of the above-described (1), the conductance valve is installed to a gas inlet of the vacuum pump connected with the process chamber. When an opening of this conductance valve is adjusted, a flow rate (called conductance) of gas flowing from this process chamber to the side of the vacuum pump is adjusted, thereby controlling the process pressure in the process chamber.

The above-described method of (2) which utilizes the MFC controls gas amount to be introduced to the process chamber by the MFC.

In the middle of evacuating the inside of the vacuum vessel with the vacuum pump, when nitrogen gas and the like is introduced to an exhaust side of the vacuum pump, a pressure of the exhaust side of the vacuum pump (sometimes called "backing pressure") increases. Since this increase of the pressure gives resistance to an air suction operation of the pump, an efficiency of gas suction by the vacuum pump decreases. However, the gas introducing system of the above-described (3) takes advantage of the phenomenon in which the efficiency of gas suction by the vacuum pump is decreased due to such introduction of nitrogen gas and the like to thereby control the process pressure in the process chamber.

However, the conductance valve of the above-described (1) is expensive and large. Further, since the conductance valve includes an operating portion for opening and closing the valve, its responsiveness is limited. In the conventional system applying this kind of conductance valve to control the process pressure, there are problems such as high cost and increased size of the overall apparatus. Further, the conventional system has a problem in that it is impossible to control the process pressure with high responsiveness.

The above-described method of (2) using MFC has problems in that the composition of process gas is changed, and that the follow-up property is low.

Further, the system introducing nitrogen gas of the above-described (3) requires a gas piping for supplying nitrogen gas to the side of the vacuum pump and a flow rate controlling apparatus and the like for adjusting the supply amount of nitrogen gas. Therefore, the overall construction of the apparatus is rather complex and the overall size of the apparatus becomes large. Further, every time the process pressure is controlled, nitrogen gas is consumed. Therefore, it also has a problem of high running cost.

The present invention is devised for solving the above-described problems. An object of the present invention is to provide a vacuum pump capable of controlling the process pressure with high responsiveness and which allows miniaturization and reduction of cost of the overall apparatus, as well as reduction of the running cost.

### SUMMARY OF THE INVENTION

To achieve the above object, there is provided, in accordance with the present invention, a vacuum pump characterized by comprising a gas inlet connected with a vacuum vessel side, a first pump mechanism portion for inhaling gas in the vacuum vessel from the gas inlet and for exhausting the gas, a gas outlet communicated with an exhaust side of the first pump mechanism portion, and a second pump mechanism portion capable of changing the pump speed of rotation independently of the first pump mechanism portion is provided on the way of an exhaust passage communicating the exhaust side of the first pump mechanism portion with the gas outlet,

The present invention is characterized in that the pressure in the vacuum vessel is controlled by changing the pump speed of rotation of the second pump mechanism portion.

The present invention is characterized in that the second pump mechanism portion having a spiral pump mechanism portion.

The present invention is characterized in that the first pump mechanism portion has a compound-type pump construction in which a turbo molecular pump mechanism portion disposed on a high-vacuum side with a thread groove pump mechanism portion disposed at a lower section of this turbo molecular pump mechanism portion are formed integrally.

In the present invention, when the pump speed of rotation of the second pump mechanism portion is changed, the backing pressure (the pressure of the exhaust side) of the first pump mechanism portion changes. For example, when the backing pressure is increased, the efficiency of gas suction from the gas inlet to the first pump mechanism portion side is reduced, and then the pressure in the process chamber is increased. Therefore, the present invention is capable of controlling the process pressure in the process chamber by changing the pump speed of rotation of the second pump mechanism portion.

### BRIEF DESCRIPTION OF THE DRAWINGS

Fig. 1 is a sectional view showing an embodiment of a vacuum pump according to the present invention.
Figs. 2A and 2B are an explanatory view showing a spiral pump mechanism portion adopted in the vacuum pump of Fig. 1, Fig. 2A is a plan view of the spiral pump mechanism portion, and Fig. 2B is a sectional view of the spiral pump mechanism portion.
Fig. 3 is a sectional view showing another embodiment of the vacuum pump according to the present invention.

### DESCRIPTION OF THE PREFERRED EMBODIEMENTS

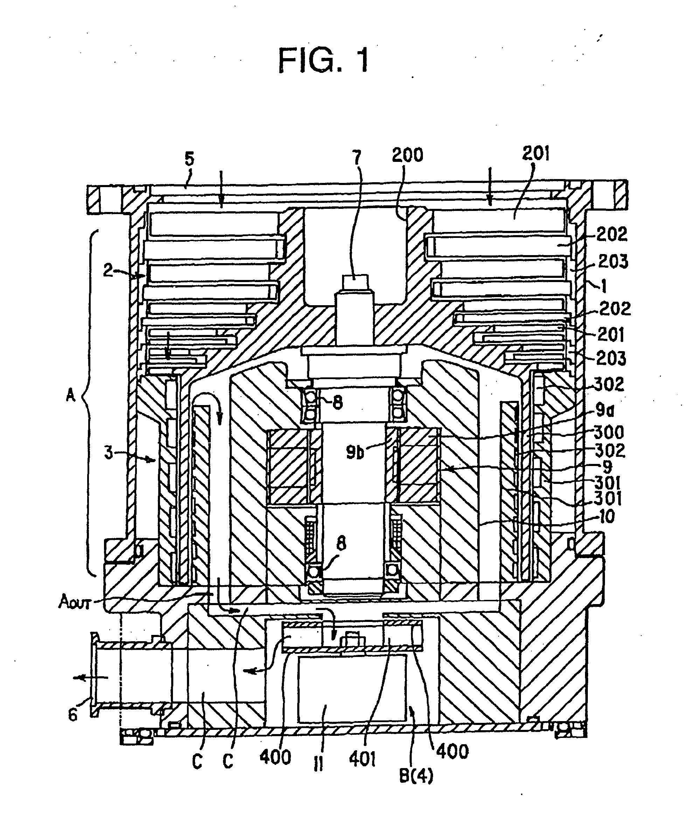

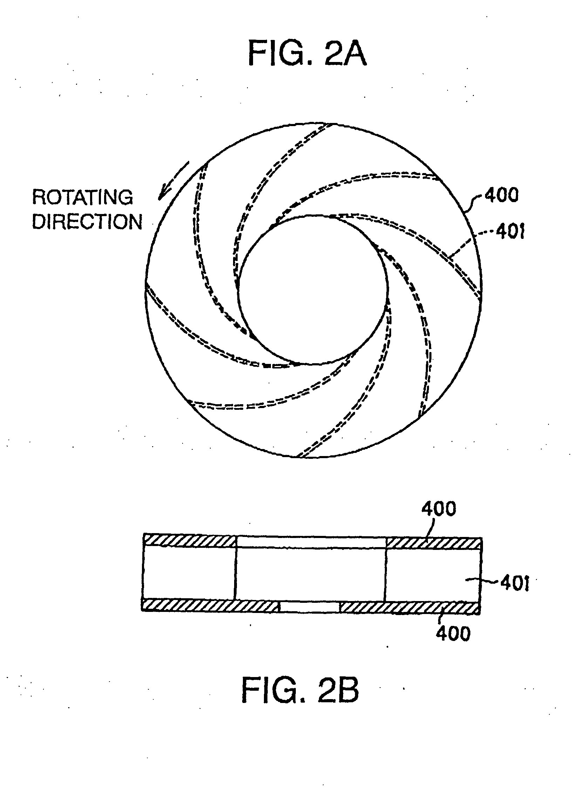

Hereinafter, an embodiment of a vacuum pump according to the present invention will be specifically described with reference, by way of example only, to Figs. 1, 2A and 2B.

The vacuum pump of the present invention shown in Fig. 1 is configured such that a first pump mechanism portion A and a second pump mechanism portion B are contained in a cylindrical pump case 1.

The upper side of the pump case 1 is equipped with a gas inlet 5. A lower side of the pump case 1 is equipped with a gas outlet 6. The first pump mechanism portion A is installed on the gas inlet 5 side of this pump case 1. The second pump mechanism portion B is installed on the way of an exhaust passage C communicating an exhaust side Aout of this first pump mechanism portion A with the gas exhaust port 6 equipped at the lower portion of the pump case 1. The gas inlet 5 is connected with a vacuum vessel side in a high vacuum, such as a process chamber of a semiconductor manufacturing apparatus or the like. On the other hand, the gas outlet 6 is communicated with the atmosphere side.

Various types of pump construction may be conceived as a specific pump construction of the first pump mechanism portion A. The pump construction in the present embodiment employs a compound-type pump construction integrating a turbo molecular pump mechanism portion 2 having an exhaust function of a turbo molecular pump system with a thread groove pump mechanism portion 3 having an exhaust function of a thread groove pump system. In this compound-type pump construction, the turbo molecular pump mechanism portion 2 is disposed at the high-vacuum side, that is, at the gas inlet 5 side of the upper portion of the pump case 1. The thread groove pump mechanism B is disposed at the side of the lower section of the turbo molecular pump mechanism portion 2.

The turbo molecular pump mechanism portion 2 is provided with a plurality of processed rotor blades 201 and stator blades 202 in the outer periphery of a rotatably installed cylindrical rotor 200. The upper end of the rotor 200 is directed to the gas inlet 5 side. The rotor blades 201 and the stator blades 202 are alternately arranged along a rotation center axis of the rotor 200. The rotor blades 201 are processed integrally with the rotor 200 and are capable of rotating integrally with the rotor 200. The stator blades 202 are fixed to the inner surface of the pump case 1 through spacers 203.

The turbo molecular pump mechanism portion 2 having the above-described construction exhausts gas molecule by utilizing interaction between the rotatable rotor blades 201 and the fixed stator blades 202. This exhaust operation is capable of producing high vacuum (degree of vacuum: 10⁻⁶ Pa).

The thread groove pump mechanism portion 3 is composed of a rotatably installed cylindrical rotor 300 and thread groove spacers 301. The rotor 300 of this thread groove pump mechanism portion 3 is provided integrally with the lower portion of the rotor 200 as a skirt of the rotor 200 of the turbo molecular pump mechanism portion 2. Further, the rotor 300 is formed on the same axis of the rotor 200 of the turbo molecular pump mechanism portion 2. One of thread groove spacers 301 is arranged on the inside of the rotor 300 and the other on the outside of the rotor 300. Both the spacer 301 provided on the inside of the rotor 300 and the thread groove spacer 301 provided on the outside of the rotor 300 have thread grooves 302. The thread grooves 302 of the thread groove spacers 301 are formed on the side facing the rotor 300. Since this combination is relative, the thread grooves 302 may also be formed on the rotor 200 side.

A rotor shaft 7 is integrally fixed and pressed into the rotor 200 of the turbo molecular pump mechanism portion 2 along the rotation center axis thereof. Since the rotor 200 is coupled with the rotor shaft 7 in this way, the rotor blades 201 formed on the outer periphery surface of the rotor 200 and the rotor shaft 7 are integrally constructed. Further, since the rotor 300 of the thread groove pump mechanism portion 3 is provided integrally with the rotor 200 of the turbo molecular pump mechanism portion 2, the rotor 300, the rotor 200 of the turbo molecular pump mechanism portion 2, and the rotor shaft 7 form an integral structure.

Therefore, in the case of the first pump mechanism portion A constructed as described above, when the rotor shaft 7 is driven to rotate, the rotor 200 of the turbo molecular pump mechanism portion 2, the rotor blades 201 and the rotor 300 of the thread groove pump mechanism portion 3 all rotate synchronously at the same speed of rotation.

Various constructions may be adopted for a bearing means of this rotor shaft 7. According to the construction in this embodiment, the rotor shaft 7 is supported by ball bearings 8. A drive motor 9 drives to rotate the rotor shaft 7. In the construction of this kind of the drive motor 9, a motor stator 9a is attached on a stator column 10 arranged on the inside of the rotor 300 of the thread groove pump mechanism portion 3 and a motor rotor 9b is provided on the outer periphery surface of the rotor shaft 7 so as to be opposed to the motor stator 9a.

Various types of pump construction may be conceived as a specific pump construction of the second pump mechanism portion B. The present embodiment employs a spiral pump mechanism portion 4 having an exhaust function of a spiral pump system as the second pump mechanism portion B.

The spiral pump mechanism portion 4 is provided with a spiral-formed impeller 401 (hereinafter, referred to as "spiral impeller") installed between a pair of rotation boards 400 comprised of the upper rotation board 400 and the lower rotation board 400. A rotation fan mechanism body constituted of these rotation boards 400 and the spiral impeller 401 shares the same rotation center axis with the first pump mechanism portion A. As regards the method of rotationally driving this rotation fan mechanism body, the rotation fan mechanism body is driven to rotate independently of the rotor shaft 7 of the first pump mechanism portion A.

That is, the above-described rotation fan mechanism body constituted of the rotation boards 400 and the spiral impeller 401 is fixed by a screw at a rotation shaft of a drive motor 11 equipped independently of the drive motor 9 for rotationally driving the rotor shaft 7 of the first pump mechanism portion A. The drive motor 11 is arranged at the lower portion side of the rotation fan mechanism body. Therefore, by controlling the drive motor 11 installed at the lower portion of the above-described rotation fan mechanism body, the spiral pump mechanism portion 4 having such construction is capable of making the pump speed of rotation (the speed of rotation of the rotation fan mechanism body) variable independently of the first pump mechanism A.

Next, an example of use and the operation of the vacuum pump constructed as described above will be described with reference to Fig. 1. In the drawing, the arrows indicate flow directions of the exhaust gas in the vacuum pump of the present invention.

The vacuum pump shown in the figure can be used, for example, as a means for evacuating the process chamber of a semiconductor manufacturing apparatus. In the case of this example, the gas inlet 5 of the pump case 1 of this vacuum pump is connected to the process chamber side.

In this vacuum pump thus connected, when an operation starting switch (not shown) is turned on, the drive motor 9 of the first pump mechanism portion A side and the drive motor 11 of the second pump mechanism portion B (the spiral pump mechanism portion 4) side start to operate.

Therefore, the rotor blades 201 of the turbo molecular pump mechanism portion 2 and the rotor 300 of the thread groove pump mechanism portion 3 and the spiral impeller 401 of the spiral pump mechanism portion 4 rotate. In this case, since the rotor blades 201 of the turbo molecular pump mechanism portion 2 and the rotor 300 of the thread groove pump mechanism portion 3 are constructed integrally with the rotor shaft 7, the rotor blades 201 and the rotor 300 rotate at the speed of rotation equal to that of the rotor shaft 7 due to such construction. However, since the spiral impeller 401 is not constructed integrally with the rotor shaft 7, the spiral impeller 401 rotates independently of the rotor shaft 7.

In the beginning of operation of this vacuum pump, the inside of the vacuum pump and the inside of the process chamber are close to atmospheric pressure and are in a viscous flow region. Here, the resistance of the rotor blades 201 of the turbo molecular pump mechanism portion 2 arises. Therefore, the pump speed of rotation of the first pump mechanism portion A (specifically the speed of rotation of the rotor 200 and the speed of rotation of the rotor 300) does not increase. However, at this time, by causing the spiral pump mechanism portion 4 including the independent drive motor (drive motor 11) to rotate rapidly (3000 rpm -50000 rpm), roughing (equal to 50 Torr or less) is executed,

In this case, the gas in the process chamber is caused to flow from the gas inlet 5 of the pump case 1 into the pump case 1 by the suction force of the spiral pump and passes through the spaces between the rotor blades 201 and the stator blades 202 in the turbo molecular pump mechanism portion 2, and flows into the thread groove pump mechanism portion 3 side that is the next lower section. The gas thus transferred to the thread groove pump mechanism portion 3 side is sucked up to the side of the spiral pump mechanism portion 4 that is the further next lower section. The gas thus sucked up to the spiral pump mechanism portion 4 side is transferred to the gas exhaust port 6 side of the pump case 1 through the exhaust passage C by the rotation of the spiral impeller 401, whereby the gas is exhausted to the outside of the pump therefrom, and is transformed into atmospheric pressure.

In this vacuum pump, when the spiral pump mechanism portion 4 is rapidly rotated at the start as described above, the degree of vacuum in the vacuum pump and the degree of vacuum in the process chamber can be rapidly increased. The pump speed of rotation of the first pump mechanism portion A can be rapidly increased. Further, in the turbo molecular pump mechanism portion 2, due to interaction between the rotating rotor blades 201 and the fixed stator blades 202, the exhausting operation of gas molecule flow is efficiently executed.

That is, in the turbo molecular pump mechanism portion 2, the uppermost rotor blade 201 rotating rapidly imparts downward momentum to the gas molecule group entering from the gas inlet 5. The gas molecules with this downward momentum are guided by the stator blade 202 to be transferred to the side of the next lower rotor blade 201. By repeating this imparting of momentum, the gas molecules are transferred from the gas inlet 5 toward the thread groove pump mechanism portion 3 side for exhaustion.

In the thread groove pump mechanism portion 3, due to interaction between the rotating rotor 300 and the thread grooves 302, the gas molecules transferred to the thread groove pump mechanism portion 3 are compressed to be transformed from an intermediate flow to a viscous flow. The gas thus made to be a viscous flow is then transferred to the spiral pump mechanism portion 4 side and is transferred to the gas exhaust port 6 side of the pump case 1 through the exhaust passage C by the rotation of the spiral impeller 401. The gas transferred to the gas exhaust port 6 side is exhausted to the outside of the pump therefrom, and is transformed into atmospheric pressure.

Incidentally, the process pressure in the process chamber is controllable at this vacuum pump side.

That is, in this vacuum pump, by controlling the drive motor 9 of the first pump mechanism portion A and the drive motor 11 of the second pump mechanism portion B respectively, the pump speed of rotation of the first pump mechanism portion A and the pump speed of rotation of the second pump mechanism portion B (the spiral pump mechanism portion 4) can be made equal to each other. However, they can also be made different. Utilizing this, for example, while the pump is operating, by setting the pump speed of rotation of the second pump mechanism portion B to be lower than that of the first pump mechanism portion A, the gas exhaust speed of the second pump mechanism portion B decreases and the backing pressure (the pressure of the exhaust side Aout) of the first pump mechanism portion A increases. Therefore, the efficiency of gas suction from the gas inlet 5 to the first pump mechanism portion A side decreases and the pressure in the process chamber increases. In this situation, when the pump speed of rotation of the second pump mechanism portion B is increased, from that time, the gas exhaust speed of the second pump mechanism portion B increases and the backing pressure of the first pump mechanism portion A decreases. Therefore, the efficiency of gas suction from the gas inlet 5 to the first pump mechanism portion A side is improved and the pressure in the process chamber decreases.

As thus mentioned, by changing the pump speed of rotation of the second pump mechanism portion B, the vacuum pump of the present embodiment is capable of changing the backing pressure of the first pump mechanism portion A and controlling the process pressure in the process chamber utilizing this change of the backing pressure.

As described above, in the vacuum pump in the present embodiment, on the way of the exhaust passage C, the spiral pump mechanism portion 4 as the second pump mechanism portion B being capable of changing the pump speed of rotation is installed independently of the first pump mechanism portion A. According to this construction of the spiral pump mechanism portion 4, by changing the pump speed of rotation in the spiral pump mechanism portion 4, the process pressure in the process chamber can be controlled. Therefore, the vacuum pump of the present invention is capable of controlling the process pressure with higher responsiveness than that in the conventional method using the conductance valve. Further, though the conventional system of introducing nitrogen gas requires the gas piping and the flow rate controlling apparatus, the vacuum pump of the present invention does not require them. Further, the vacuum pump of the present invention does not consume unnecessary gas. As a result, it allows miniaturization and simple construction of the overall apparatus and reduction of the running cost.

According to the vacuum pump of the present embodiment, since the turbo molecular pump mechanism portion 2 is disposed at the high-vacuum side and the spiral pump mechanism portion 4 is disposed at the atmosphere side and the thread groove pump mechanism portion 3 is disposed between the turbo molecular pump mechanism portion 2 and the spiral pump mechanism portion 4, efficient evacuation from atmosphere to high-vacuum (degree of vacuum: 10⁻⁶ Pa) can be performed with only one vacuum pump of the present invention.

The first pump mechanism portion A can employ, for example, the construction having only the turbo molecular pump mechanism portion 2 or the construction using a screw pump, other than the above-described compound-type pump construction comprising the turbo molecular pump mechanism portion 2 and the thread groove pump mechanism portion 3.

The second pump mechanism portion B can employ not only the above-described spiral pump mechanism portion 4 but another pump mechanism having the exhaust function equivalent to that of the spiral pump mechanism portion 4.

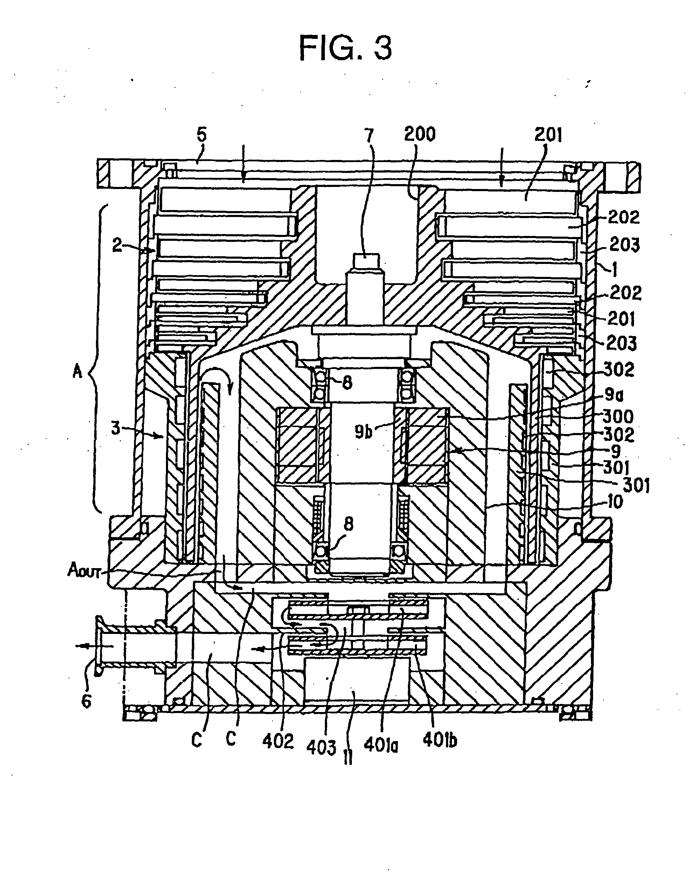

The above-described embodiment shows the example of the single-stage spiral impeller 401. As shown in Fig. 3, the spiral impeller 401 may also be composed of two-stage spiral impellers including an upper impeller and a lower impeller. Further, multi-stage structures may also be adopted therefor. When the spiral impeller 401 employs the construction comprising plural stages, as shown in Fig. 3, a division wall 402 is provided between an upper-side spiral impeller 401a and a lower-side spiral impeller 401b. Further, an opening 403 for introducing exhaust gas from the upper-side spiral impeller 401a to the lower-side spiral impeller 401b is formed on one part of the barrier 402.

As the bearing means of the rotor shaft 7, a noncontacting-type bearing such as a magnetic bearing, for example, may be adopted other than the above-described ball bearing 8.

In the vacuum pump according to the present invention, as described above, on the way of the exhaust passage, the second pump mechanism portion capable of changing the pump speed of rotation is installed independently of the first pump mechanism portion A. According to this construction of the second pump mechanism portion, by changing the pump speed of rotation in the second pump mechanism portion, the process pressure and the like in the process chamber can be controlled. Therefore, the vacuum pump of the present invention is capable of controlling the process pressure with higher responsiveness than that in the conventional method using the conductance valve. Further, though the conventional system of introducing nitrogen gas requires the gas piping and the flow rate controlling apparatus, the vacuum pump of the present invention does not require them. Further, the vacuum pump of the present invention does not consume unnecessary gas. As a result, it allows miniaturization and simple construction of the overall apparatus and reduction of the running cost.

The aforegoing description has been given by way of example only and it will be appreciated by a person skilled in the art that modifications can be made without departing from the scope of the present invention.

For example, a two stage spiral impeller is shown for the second pump mechanism portion B in figure 3. However, a pump mechanism having more than two stages can also be used.

## Claims

1. A vacuum pump comprising:
a gas inlet connected with a vacuum vessel side,
a first pump mechanism portion for inhaling gas in the vacuum vessel from the gas inlet and for exhausting the gas,
a gas outlet communicated with an exhaust side of the first pump mechanism portion, and
a second pump mechanism portion capable of changing the pump speed of rotation independently of the first pump mechanism portion is provided on the way of an exhaust passage communicating the exhaust side of the first pump mechanism portion with the gas outlet.

2. A vacuum pump according to claim 1, wherein the pump speed of rotation of the second pump mechanism portion may be changed to control the pressure in the vacuum vessel.

3. A vacuum pump according to claim 1 or claim 2, wherein the second pump mechanism portion comprises a spiral pump mechanism portion.

4. A vacuum pump according to claim 3, wherein the spiral pump mechanism portion comprises a spiral impeller.

5. A vacuum pump according to claim 4, wherein the spiral pump mechanism portion comprises a plurality of spiral impellers.

6. A vacuum pump according to claim 4, wherein the spiral pump mechanism portion comprises a plurality of spiral impellers, and has a barrier between the spiral impellers.

7. A vacuum pump according to any one of the preceding claims, wherein the first pump mechanism portion has a compound-type pump construction in which a turbo molecular pump mechanism portion disposed on a high-vacuum side with a thread groove pump mechanism portion disposed at a lower section of this turbo molecular pump mechanism portion are formed integrally.

8. A method of operating a vacuum pump comprising providing a first pump mechanism having a gas inlet for inhaling gas from a vacuum vessel, providing a second pump mechanism portion coupled to a gas outlet of an exhaust side of the first pump mechanism, and changing the pump speed of rotation of the second pump mechanism relative to the speed of rotation of the first pump mechanism.

9. A method according to claim 8, comprising changing the pump speed of rotation of the second pump mechanism.

10. A method according to claim 8 or 9 wherein the second pump mechanism portion is selected to comprise a spiral pump mechanism.
